# EUROPEAN PATENT APPLICATION

(11) **EP 4 108 637 A1**
(43) Date of publication of application: **28.12.2022**
(21) Application number: 22175252.0
(22) Date of filing: 24.05.2022
(51) Int. Cl.: C01G 53/00, H01M 4/04, H01M 4/131, H01M 4/36, H01M 4/525, H01M 10/052

(54) **CATHODE ACTIVE MATERIAL FOR LITHIUM SECONDARY BATTERY, METHOD OF PREPARING THE SAME AND LITHIUM SECONDARY BATTERY INCLUDING THE SAME**

(30) Priority: 31.05.2021 KR 20210070013
(71) Applicant: SK On Co., Ltd., Seoul 03188 (KR)
(72) Inventor: CHO, Yong Hyun, 34124 Daejeon (KR); DO, Ji Yae, 34124 Daejeon (KR); LEE, Yoon Ji, 34124 Daejeon (KR); KANG, Min Suk, 34124 Daejeon (KR)
(74) Representative: Stolmár & Partner Patentanwälte PartG mbB

(57) **Abstract**

A cathode active material for a lithium secondary battery includes a core portion comprising a lithium metal oxide particle, and a coating layer at least partially covering a surface of the core portion and including a lithium boron composite oxide. The lithium boron composite oxide is included in an amount from 100 ppm to 1,500 ppm based on a total weight of the cathode active material. A lithium secondary battery having improved structural stability and electrical property is provided using the cathode active material.

## Description

### CROSS-REFERENCE TO RELATED APPLICATION AND CLAIM OF PRIORITY

This application claims priority to Korean Patent Applications No. 10-2021-0070013 filed on May 31, 2021 in the Korean Intellectual Property Office (KIPO), the entire disclosure of which is incorporated by reference herein.

### BACKGROUND

### 1. Field

The present invention relates to a cathode active material for a lithium secondary battery, a method of preparing the same, and a lithium secondary battery including the same. More particularly, the present invention relates to a lithium metal oxide-based cathode active material, a method of preparing the same, and a lithium secondary battery including the same.

### 2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, the secondary battery or a battery pack including the same is being developed and applied as an eco-friendly power source of an electric automobile such as a hybrid vehicle.

The secondary battery includes, e.g., a lithium secondary battery, a nickel-cadmium battery, a nickel-hydrogen battery, etc. The lithium secondary battery is highlighted due to high operational voltage and energy density per unit weight, a high charging rate, a compact dimension, etc.

For example, the lithium secondary battery may include an electrode assembly including a cathode, an anode and a separation layer, and an electrolyte immersing the electrode assembly. The lithium secondary battery may further include an outer case having, e.g., a pouch shape.

A lithium composite oxide may be used as a cathode active material of the lithium secondary battery, and may be preferably developed to have high capacity, high power and improved life-span properties. Accordingly, chemical stability of the lithium composite oxide is required even when charging and discharging are repeatedly performed.

However, when the lithium composite oxide is exposed to an air or reacts with an electrolyte during the use of the battery, by-products of lithium or nickel may be generated due to a side reaction on the surface of the lithium composite oxide particle. As a result, life-span and operational stability of the battery may be deteriorated.

For example, in a high-nickel lithium composite oxide, a large amount of lithium impurities (LiOH, Li₂CO₃, etc.) may be formed on the surface, which may cause deterioration of battery performance. When the lithium impurity is washed with water, a specific surface area of the cathode active material may increase, and as a side reaction with the electrolyte may be accelerated to degrade a stability of a surface structure.

For example, Korean Patent Laid-Open No. 10-2017-0093085 discloses a cathode active material including a transition metal compound, which may not provide sufficient stability of the cathode active material.

### SUMMARY

According to an aspect of the present invention, there is provided a cathode active material for a lithium secondary battery having improved operational stability and capacity retention properties.

According to an aspect of the present invention, there is provided a method of preparing a cathode active material for a lithium secondary battery having improved operational stability and capacity retention properties.

According to an aspect of the present invention, there is provided a lithium secondary battery having improved operational stability and capacity retention properties.
According to exemplary embodiments, a cathode active material for a lithium secondary battery includes a core portion including a lithium metal oxide particle represented by Chemical Formula 1, and a coating layer at least partially covering a surface of the core portion and including a lithium boron composite oxide. The lithium boron composite oxide is included in an amount from 100 ppm to 1,500 ppm based on a total weight of the cathode active material.

[Chemical Formula 1] LiₓNiₐM1_{b}O₂

In Chemical Formula 1, M1 is at least one element selected from the group consisting of Co, Mn, Ti, Zr, Al, Mg and Cr, 0.8<x<1.5, 0.7≤a≤0.96, and 0.98≤a+b ≤1.02.

In some embodiments, the coating layer may cover 70% or more of a total surface area of the core portion.

In some embodiments, the coating layer may cover 90% or more of a total surface area of the core portion.

In some embodiments, the lithium metal oxide particle may have a layered structure.

In some embodiments, the lithium boron composite oxide may include at least one amorphous compound selected from LiBO₂, Li₂BO₂, Li₂B₄O₇, Li₂B₈O₁₃ and Li₃BO₃.

In some embodiments, the coating layer may further include aluminum.

In some embodiments, the lithium metal oxide particle may include a compound represented by Chemical Formula 2.

[Chemical Formula 2] Li_{y}Ni_{c}Co_{d}MnₑM2_{f}O₂

In Chemical Formula 2, M2 may include at least one element selected from the group consisting of Ti, Zr, Al, Mg and Cr, 0.8<y<1.5, 0.70≤c≤0.96, 0.02≤d≤0.20, 0.02≤e ≤0.20, 0≤f≤0.05, and 0.98≤c+d+e≤1.02.

In some embodiments, M2 in Chemical Formula 2 may be Al, or an alloy of Al and at least one of Ti, Zr, Mg, and Cr.

According to exemplary embodiments, a lithium secondary battery includes a cathode including the cathode active material for a lithium secondary battery according to embodiments as described above, and an anode facing the cathode.

In a method of preparing a cathode active material for a lithium secondary battery, a core portion including a lithium metal oxide particle represented by Chemical Formula 1 is prepared. The core portion and a boron oxide are mixed to form a mixture. The mixture is heat-treated to form a coating layer containing a lithium boron composite oxide on a surface of the core portion. The lithium metal oxide particle prepared as the core portion contains a lithium compound in a range from 100 ppm to 2,000 ppm on a surface of the lithium metal oxide particle based on a total weight of the lithium metal oxide particle.

[Chemical Formula 1] LiₓNiₐM1_{b}O₂

In Chemical Formula 1, M1 is at least one element selected from the group consisting of Co, Mn, Ti, Zr, Al, Mg and Cr, 0.8<x<1.5, 0.7≤a≤0.96, and 0.98≤a+b ≤1.02.

In some embodiments, the heat-treating may be performed at a temperature in a range from 250 °C to 500 °C.

In some embodiments, the mixing the core portion and the boron oxide may be performed by a mechanical milling.

In some embodiments, the coating layer may cover 70% or more of a total surface area of the core portion.

In some embodiments, the boron oxide may be used in an amount from 100 ppm to 1,500 ppm based on a total weight of the lithium metal oxide particle.

In some embodiments, the boron oxide may have a volumetric average particle diameter in a range from 10 nm to 500 nm.

In some embodiments, an aluminum compound may be further added in the formation of the mixture.

In some embodiments, a content of the lithium compound on a surface of the cathode active material for a lithium secondary battery may be 50% or less of a content of the lithium compound on a surface of the lithium metal oxide particle before the formation of the coating layer.

In some embodiments, the lithium metal oxide particle may be represented by Chemical Formula 2.

[Chemical Formula 2] Li_{y}Ni_{c}Co_{d}MnₑM2_{f}O₂

In Chemical Formula 2, M2 may be at least one element selected from the group consisting of Ti, Zr, Al, Mg and Cr, 0.8<y<1.5, 0.70≤c≤0.96, 0.02≤d≤0.20, 0.02≤e ≤0.20, 0≤f≤0.05, and 0.98≤c+d+e≤1.02.

In the cathode active material for a lithium secondary battery according to exemplary embodiments, a lithium boron composite oxide may be uniformly distributed throughout a surface of a core portion including a lithium metal oxide particle.

The lithium boron composite oxide may reduce a specific surface area by smoothly coating the surface of the cathode active material. In this case, a reaction area between the cathode active material and an air and/or between the cathode active material and an electrolyte may be reduced, so that side reactions may be suppressed.

In some embodiments, the cathode active material may further include aluminum, so that a surface structure and internal structure of the cathode active material may be strongly stabilized to prevent the side reactions. Thus, life-span properties and high-temperature stability of the cathode active material may be improved.

### BRIEF DESCRIPTION OF THE DRAWINGS

FIG. 1 is a schematic cross-sectional view illustrating a lithium secondary batteries in accordance with exemplary embodiments.
FIG. 2 is a scanning electron microscopy (SEM) image showing a surface of a cathode active material for a lithium secondary battery of Example 1;
FIG. 3 is an SEM image showing a surface of a cathode active material for a lithium secondary battery of Comparative Example 1.
FIG. 4 is a graph showing increase of lithium by-products according to a storage period of cathode active materials for a lithium secondary battery of Example 1 and Comparative Example 1.

### DETAILED DESCRIPTION OF THE EMBODIMENTS

According to embodiments of the present invention, a cathode active material for a secondary battery which includes a core portion including a lithium metal oxide particle, and a coating layer covering at least a portion of a surface of the core portion and including lithium boron composite oxide to provide improved structural stability and capacity retention properties is provided. According to embodiments of the present invention, a method of preparing a cathode active material for a lithium secondary battery is also provided.

According to embodiments of the present invention, a lithium secondary battery including the cathode active material is also provided.

In the cathode active material for a secondary battery, the coating layer may surround at least a portion of the surface of the core portion to be employed to a lithium secondary battery having enhanced structural and life-span stability,

The term "lithium metal oxide particle" used herein refers to a composite oxide including lithium and an alkali metal except for lithium, an alkaline earth metal, a transition metal, a post-transition metal or a metalloid.

Hereinafter, the present invention will be described in detail with reference to the accompanying experimental examples and drawings. However, those skilled in the art will appreciate that such embodiments described with reference to the accompanying drawings and examples are provided to further understand the spirit of the present invention and do not limit subject matters to be protected as disclosed in the detailed description and appended claims

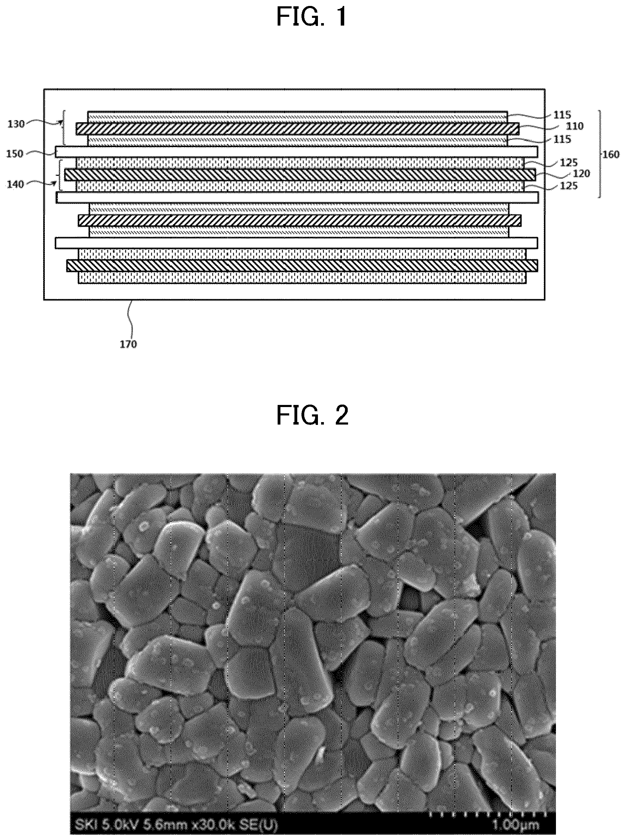

Hereinafter, a cathode active material and a lithium secondary battery including the same according to exemplary embodiments will be described in detail commonly with reference to FIG. 1.

FIG. 1 is a schematic cross-sectional view illustrating a lithium secondary batteries in accordance with exemplary embodiments.

Referring to FIG. 1, a lithium secondary battery may include a cathode 130, an anode 140 and a separation layer 150 interposed between the cathode and the anode.

The cathode 130 may include a cathode current collector 110 and a cathode active material layer 115 formed by coating a cathode active material on the cathode current collector 110.

The cathode active material for a lithium secondary battery according to exemplary embodiments (hereinafter, abbreviated as a cathode active material) may include a core portion and a coating layer at least partially covering a surface of the core portion.

The core portion may include a lithium metal oxide particle represented by Chemical Formula 1 below. Preferably, the lithium metal oxide particle having a layered structure may be included for obtaining high-capacity properties.

[Chemical Formula 1] LiₓNiₐM1_{b}O₂

In Chemical Formula 1, M1 may be at least one element selected from the group consisting of Co, Mn, Ti, Zr, Al, Mg and Cr. Here, 0.8<x<1.5, 0.7≤a≤0.96, and 0.98≤a+b ≤1.02.

The term 'excess' refers to being included in the largest content or mole fraction among elements excluding lithium and oxygen.

For example, nickel may serve as a metal related to capacity of the lithium secondary battery. Nickel may be included with an excess amount among elements excluding lithium and oxygen so that a capacity of the lithium secondary battery may be enhanced. As a content of nickel increases, the capacity and power of the lithium secondary battery may be improved. However, an excessive content of nickel may be disadvantageous from aspects of life-span, mechanical and electrical stability, etc.

For example, if the content of nickel is excessively increased, defects such as ignition and short-circuit may not be sufficiently suppressed when a penetration by an external object occurs. Accordingly, according to exemplary embodiments, manganese (Mn) may be distributed throughout an entire area of the particle to reduce or prevent chemical and mechanical instability caused by nickel.

Manganese (Mn) may serve as a metal related to mechanical and electrical stability of the lithium secondary battery. For example, manganese may suppress or reduce defects such as ignition and short-circuit that may occur when the cathode is penetrated by an external object, and may increase life-span of the lithium secondary battery. Cobalt (Co) may serve as a metal related to a conductivity or a resistance of the lithium secondary battery.

If the mole fraction of nickel is less than 0.7, the capacity and power may be relatively degraded. If the mole fraction of nickel exceeds 0.96, life-span and mechanical stability may be relatively degraded.

In some embodiments, the lithium metal oxide particle may be an NCM-based active material particle represented by Chemical Formula 2 below.

[Chemical Formula 2] Li_{y}Ni_{c}Co_{d}MnₑM2_{f}O₂

In Chemical Formula 2, M₂ is at least one element selected from the group consisting of Ti, Zr, Al, Mg and Cr. Here, 0.8<y<1.5, 0.70≤c≤0.96, 0.02≤d≤0.20, 0.02≤e ≤0.20, 0≤f≤0.05, and 0.98≤c+d+e≤1.02.

For example, the lithium metal oxide particle may contain nickel, cobalt and manganese to provide balanced properties of power, capacity, life-span and stability.

Preferably, in Chemical Formula 2, 0.80≤c≤0.92, 0.05≤d≤0.1, and 0.03≤e≤0.1. In this case, the capacity may be increased while maintaining the stability of the secondary battery.

In some embodiments, M2 in Chemical Formula 2 may be Al or an alloy of Al and one or more of Ti, Zr, Mg, and Cr. Al may prevent the surface and internal structures of the cathode active material from being destroyed due to the side reactions with the electrolyte or moisture and carbon dioxide in the air during an electrochemical reaction.

Thus, chemical and structural stability of the cathode active material may be more efficiently improved. For example, stability of the surface and internal structures may be maintained even after a long time storage under high-temperature conditions. Further, a particle structure may be effectively protected even under the high-temperature conditions, thereby preventing deterioration of an electrochemical performance of the lithium secondary battery after being stored at high temperature.

The coating layer may be formed on the surface of the core portion. The core portion may be passivated by the coating layer, so that penetration stability and life-span may be further improved, and structural stability of the cathode active material may be enhanced.

In exemplary embodiments, the coating layer may at least partially cover the surface of the core portion. For example, the coating layer may be formed as a full coating covering an entire surface of the core portion or a partial coating covering a portion of the surface of the core portion.

In some embodiments, the coating layer may be discontinuously formed on the surface of the core portion. For example, coating particles forming the coating layer may be disposed on the surface of the core portion to be spaced apart from each other in the form of an island.

In some embodiments, the coating layer may be continuously formed on the surface of the core portion. For example, the coating layer may be formed in the form of a film including coating particles on the surface of the core portion. In this case, the core portion may be more effectively prevented from being in contact with moisture and carbon dioxide in the air and the core portion, and thus the side reactions and gas generation on the surface of the core portion may be prevented.

In exemplary embodiments, the coating layer may cover about 70% or more of a total surface area of the core portion. Within the above coating coverage range, the core portion may be more effectively prevented from being in contact with the electrolyte or air. Accordingly, a generation of by-products on the surface of the core may be prevented, and structural stability and life-span properties of the secondary battery may be further improved. Preferably, the coating layer may cover about 90% or more of the total surface area of the core portion.

In exemplary embodiments, the coating layer may include a lithium boron composite oxide. For example, the lithium boron composite oxide may be product formed by reacting a lithium compound and a boron oxide present on the surface of the lithium metal oxide particle at high temperature.

In some embodiments, the lithium compound may be a residual lithium remaining on the surface of the lithium metal oxide particle after a formation of the lithium metal oxide particle. For example, the lithium compound may be distributed on the surface of the particle in the form of LiOH, Li₂CO₃, etc.

In some embodiments, the boron oxide may include B₂O₃, HBO₂, H₃BO₃, H₂B₄O₇, (NH₄)₂B₄O₇, C₆H₅B(OH)₂, (C₆H₅O)₃B, [CH₃(CH₂)₃O]₃B, C₁₃H₁₉BO₃, C₃H₉B₃O₆ or (C₃H₇O)₃B, etc.

Oxide particles containing a metal element have normally very high melting point of about 1,000 °C or more. However, the boron oxide particle may have a low melting point of about 300 °C or less, and the boron oxide particle may be melted during a heat treatment process and may be uniformly distributed throughout the surface of the active material particles. Accordingly, the lithium boron composite oxide may be uniformly formed entirely on the surface of the core portion.

For example, the lithium boron composite oxide may form a smooth surface of the core portion. The lithium boron composite oxide may provide a substantially smooth surface by filling irregularities or protrusions present on the surface of the core portion.

Thus, a specific surface area of the cathode active material may be reduced, so that the side reaction with the electrolyte may be suppressed. Accordingly, the life-span and storage properties of the cathode active material may be improved.

In exemplary embodiments, the lithium boron composite oxide may include crystalline or amorphous LiBO₂, Li₂BO₂, Li₂B₄O₇, Li₂B₈O₁₃ or Li₄BO₃, preferably may be amorphous.

The amorphous lithium boron composite oxide may provide a continuous film-type coating, and may also form a coating in which a film-type and an island-type are mixed together. Accordingly, the coating layer may be formed uniformly on the core portion, thereby reducing the specific surface area of the cathode active material and enhancing a protective effect of the coating layer.

The lithium boron composite oxide may be included in an amount from 100 ppm to 1,500 ppm based on a total weight of the cathode active material. If the content of the lithium boron composite oxide is less than 100 ppm, the surface of the core portion may not be sufficiently coated with the lithium boron composite oxide. If the content of the lithium boron composite oxide exceeds 1,500 ppm, a thickness and a resistance of the coating layer may be increased due to an excess amount of the lithium boron composite oxide to degrade the capacity and power properties of the cathode active material.

Preferably, the lithium boron composite oxide may be included in an amount from 200 ppm to 800 ppm based on the total weight of the cathode active material. In the above range, a lithium transfer ability may be maintained while the surface structure of the cathode active material may be protected.

In some embodiments, a thickness of the coating layer may be in a range from 10 nm to 200 nm, preferably from 15 nm to 150 nm. Within the above range, the mechanical/chemical stability of the cathode active material may be improved, and the power and capacity properties may be enhanced.

In some embodiments, the lithium compound (e.g., the residual lithium) may be included in an amount from 100 ppm to 2000 ppm based on the total weight of the lithium metal oxide particles. Preferably, the amount of the lithium compound may be in a range from 200 ppm to 800 ppm based on the total weight of the lithium metal oxide particles. Within the above range, the coating coverage of the surface of the core portion may be enhanced, and the amount of the lithium compound and the boron oxide remaining on the surface of the cathode active material after forming the coating layer may be reduced.

In some embodiments, the coating layer may further include aluminum (Al) in addition to boron. For example, the coating layer may be prepared by further adding an aluminum compound in addition to the boron oxide, and the aluminum compound may include an aluminum-containing oxide or aluminum-containing hydroxide. In this case, the surface structure of the cathode active material may be further stabilized to prevent the side reaction, and life-span properties and high temperature stability may be improved.

In some embodiments, aluminum included in the coating layer may be inserted and doped to a predetermined depth from the surface of the core portion.

For example, an oxidation number of Al is +3, and an ionic radius may be similar to that of Ni, Co and Mn. Thus, Al may be easily substituted with trivalent Ni, Co and Mn to be doped in a surface region of the lithium metal oxide particle. Further, Al may have a bonding force with oxygen to prevent a structural change caused by an oxygen desorption during an electrochemical reaction at room temperature and high temperature, thereby improving the lifespan stability of the cathode active material.

Al has a fixed oxidation number of +3, and thus a structural collapse due to a change in the oxidation number of transition metals present on the surface of lithium metal oxide particle during storage and use of the secondary battery may be prevented.

Additionally, Al may react with fluorine in the electrolyte of the secondary battery to form a AlF₃ coating portion. The AlF₃ coating may stabilize the surface structure of the cathode active material. Accordingly, the life-span and high temperature stability of the secondary battery may be improved.

In some embodiments, aluminum may be included in the coating layer as at least one compound of crystalline or amorphous Al₂O₃, lithium-aluminum oxide, AlOOH and Al(OH)₃.

In some embodiments, the aluminum compound in the coating layer may be amorphous. In this case, the surface of the core portion may be more uniformly coated, to entirely protect the surface of the cathode active material.

In some embodiments, the coating layer may include a first coating layer including aluminum and a second coating layer including boron. For example, the first coating layer may include the aluminum compound, and the second coating layer may include the lithium boron composite oxide.

In some embodiments, the coating layer may include both boron and aluminum. For example, the coating layer may include the lithium boron composite oxide, the aluminum compound and/or a lithium-aluminum-boron compound.

In some embodiments, the lithium-aluminum-boron compound may have an amorphous or crystalline structure.

For example, the coating layer may include at least one of LiAlBOH₄, Li₄AlB, Li₃AlB₃O, Li₂AlBO₂, Li₂AlBO₄, LiAlB₂O₅, Li₃AlB₂O₆ and Li₂AlB₅O₁₀.

The lithium compound exposed on the surface of the cathode active material may react with moisture or carbon dioxide in the air, and may be decompose into lithium hydroxide, lithium carbonate, nickel oxide, etc., to generate by-products. Further, nickel ions exposed to the surface may react with the electrolyte to cause a phase transition in a surface layer portion of the particle and to transform a crystal structure.

However, according to exemplary embodiments, the lithium compound on the surface of the lithium metal oxide particle may be provided as a lithium source for forming the coating layer, so that a content of the lithium compound on the surface of the cathode active material may be effectively reduced, thereby suppressing the generation of the by-products. Further, the coating layer may passivate the surface of the core portion to effectively block the contact between the core portion and the electrolyte or between the core portion and moisture/carbon dioxide in the air.

Therefore, even when stored or operated for a long period under high temperature conditions, the structure, and power and capacity properties of the cathode active material may be maintained.

Hereinafter, a method of preparing a cathode active material according to the above-described embodiments of the present invention is described in detail.

In exemplary embodiments, active material metal salts may be prepared. The active material metal salts may include, e.g., a nickel salt, a manganese salt and a cobalt salt. Examples of the nickel salt include nickel sulfate, nickel hydroxide, nickel nitrate, nickel acetate, and a hydrate thereof. Examples of the manganese salt include manganese sulfate, manganese acetate, and a hydrate thereof. Examples of the cobalt salt include cobalt sulfate, cobalt nitrate, cobalt carbonate, and a hydrate thereof.

An aqueous solution may be prepared by mixing the metal salts of the active material with a precipitating agent and/or a chelating agent in a ratio satisfying the content or concentration ratio of each metal described with reference to the above Chemical Formula 1 or 2. The aqueous solution may be co-precipitated in a reactor to prepare a composite metal salt compound (e.g., an NCM precursor).

The precipitating agent may include an alkaline compound such as sodium hydroxide (NaOH), sodium carbonate (Na₂CO₃), etc. The chelating agent may include, e.g., aqueous ammonia (e.g., NH₄OH), ammonium carbonate (e.g., NH₃HCO₃), etc.

In some embodiments, the metal salt compound may further include a compound containing Al, Zr, Ti, Mg or Cr in consideration of a doping formation. For example, an oxide, a hydroxide, a halide or a mixture thereof including at least one element of Al, Zr, Ti, Mg, and Cr may be used. Preferably, the metal salt compound may further include an aluminum-containing compound.

Thereafter, a lithium source may be mixed with the composite metal salt compound, and may be reacted through a co-precipitation method to prepare a lithium composite. The lithium source may include, e.g., lithium carbonate, lithium nitrate, lithium acetate, lithium oxide, lithium hydroxide, etc. These may be used alone or in combination thereof.

The lithium composite may be fired to form a core portion including a lithium metal oxide particle. The firing may be performed, e.g., at a temperature in a range from 450 °C to 850 °C in an oxygen-containing atmosphere.

Unreacted lithium compounds may remain or may be precipitated on the surface of the lithium metal oxide particles synthesized through the firing. In some embodiments, the lithium metal oxide particles may be washed with an aqueous or organic solvent to control a content of the lithium compound on the surface of the particle.

For example, the content of the lithium compound (e.g., lithium by-products such as LiOH, Li₂CO₃, etc.) on the surface of the synthesized lithium metal oxide particle may be controlled through a pure water washing (washing with water) in a range from 100 ppm to 2,000 ppm based on a total weight of the lithium metal oxide particle. If the content of the lithium compound is less than about 100 ppm based on the total weight of the lithium metal oxide particle, a sufficient lithium source may not be provided and a lithium boron composite oxide for forming the coating layer may not be sufficiently formed.

If the content of the lithium compound exceeds about 2,000 ppm, an amount of the lithium compound remaining on the surface of the active material after the formation of the coating layer may increase, thereby increasing the lithium by-products. Further, an amount of boron oxide that may be input for consuming the lithium compound may increases. Accordingly, a content of boron oxide remaining after the formation of the coating layer may increase, and the lithium boron composite oxide of the coating layer may be excessively generated.

Preferably, the water washing may be repeated so that the content of the lithium compound may be within 200 ppm to 1,000 ppm based on the total weight of the lithium metal oxide particle. Within the above range, a sufficient lithium source for achieving the formation of the coating layer or passivation effect while suppressing the generation of the lithium by-products.

The pure water used for the washing may include, e.g., de-ionized water having a specific resistance less than 25 mΩcm.

The core portion including the lithium metal oxide particle may be mixed with a boron oxide at high temperature to form a mixture. Thereafter, the mixture may be heat-treated to prepare a cathode active material for a lithium secondary battery having a coating layer formed thereon. For example, the coating layer including the lithium boron composite oxide may be formed on the surface of the core portion by a reaction between the boron oxide and the lithium compound on the surface of the lithium metal oxide particle in the heat treatment.

The mixing may be dry-mixing performed in a non-solution phase. In this case, damages and side reactions of the lithium metal oxide particle caused by an aqueous solution may be suppressed.

In some embodiments, the dry mixing may be performed using a mixer, a hand mixing or a mixing by a mechanical milling. Preferably, the mixing using the mechanical milling may be performed to more uniformly form the coating layer on the surface of the core portion.

For example, the core portion including the lithium metal oxide particles and boron oxide particles may be mixed using a roller mill, a ball mill, a hammer mill, a high energy mill, a stirred mill, a planetary mill, a vibration mill, an attrition mill, a jet mill, etc., to induce the mixing by a friction. In some embodiments, a compressive stress may be mechanically applied by rotating the mixture of the core portion and the boron oxide at a rotational speed in a range from 100 rpm to 1500 rpm.

In some embodiments, a volumetric average particle diameter of the boron oxide may be in a range from 10 nm to 500 nm. If the volumetric average particle diameter of the boron oxide is excessively large, a temperature may be increased due to a friction before the sufficient mixing is performed, and the lithium compound and the boron oxide may react in an early phase and the uniform coating layer may not be formed. In the above particle size range, the uniform coating layer may be formed on the substantially entire surface of the core portion.

The heat treatment may be performed at a temperature from 250 °C to 500 °C. In the above temperature range, e.g., the boron oxide may melt and flow to react with at least a portion of the lithium compound present on the surface of the lithium metal oxide particle so that the lithium boron composite oxide may be formed. The lithium boron composite oxide may serve as the coating layer to uniformly coat the entire surface of the core portion.

In some embodiments, the heat treatment may be performed after the dry mixing. For example, after mixing the lithium metal oxide particle and the boron oxide in a stirring device, the mixture may be heat-treated to prepare the cathode active material for a lithium secondary battery.

In some embodiments, the heat treatment may be performed substantially simultaneously with the dry mixing. For example, the lithium metal oxide particle and the boron oxide may be put in a reactor and mixed while raising a temperature to prepare the cathode active material for a lithium secondary battery.

In some embodiments, the dry mixing and the heat treatment may be performed in an inert atmosphere or an oxygen-containing atmosphere. The inert atmosphere may include a nitrogen gas atmosphere or an argon gas atmosphere. The oxygen-containing atmosphere may include, e.g., an oxidizing atmosphere having an oxygen content of about 20% or more.

In example embodiments, the boron oxide may include a boric acid-based compound such as HBO₂, H₃BO₃ or H₂B₄O₇.

In some embodiments, the boron oxide may be used in an amount from 100 ppm to 1,500 ppm based on the total weight of the lithium metal oxide particle. If the amount of the boron oxide is less than about 100 ppm, the coating layer formed on the surface of the core portion may become thin, and an effect of inhibiting the side reaction between the electrolyte and air may not be sufficient. If the amount of the boron oxide is greater than about 1,500 ppm, unreacted boron oxide may be excessively present on the surface of the active material, thereby increasing a resistance and may deteriorate electrochemical properties of the secondary battery.

Preferably, the boron oxide may be used in an amount from 200 ppm to 1,200 ppm based on the total weight of the lithium metal oxide particle. Within the above range, the core portion may be uniformly coated with the coating layer of an appropriate thickness while preserving electrical properties.

In some embodiments, an aluminum compound may be included in addition to lithium metal oxide particle and the boron oxide, and mixed and heat-treated to obtain the cathode active material.

For example, the lithium metal oxide particle and the aluminum compound may be mixed and heat-treated to prepare a preliminary active material having a first coating layer containing aluminum formed thereon. Thereafter, the preliminary active material and the boron oxide may be dry-mixed, and then heat-treated to form the cathode active material on which a second coating layer may be formed.

For example, the lithium metal oxide particles, the boron oxide and the aluminum compound may be mixed together, and then heat-treated to form an oxide coating layer containing both boron and aluminum.

For example, a portion of aluminum components may penetrate into the core portion during the mixing and the heat-treatment. In this case, the core portion may be doped with aluminum.

In some embodiments, the aluminum compound may be mixed in an amount from 500 ppm to 3,000 ppm based on the total weight of the lithium metal oxide particle, preferably from 1,000 to 2,000 ppm. In the above range, aluminum may be uniformly doped into the coating layer and the core portion, so that a surface structure of the cathode active material may be strongly stabilized, and the life-span properties and high temperature stability of the secondary battery may be improved.

In some embodiments, the coating layer may be formed to cover 70% or more of a surface area of an entire surface of the core portion. Preferably, the coating layer may be formed to cover 90% or more of the surface area of the entire surface of the core portion.

In the formation of the coating layer, the lithium compound remaining on the surface of the lithium metal oxide particle may be provided as a lithium source for forming the coating layer. Accordingly, the lithium compound on the surface of the lithium metal oxide particles may be removed when the coating layer is formed. Thus, the reduction of impurities and the protection of the surface of the active material may be both implemented by the formation of the coating layer.

For example, a content of the lithium compound on the surface of the cathode active material may be 50% or less of a content of the lithium compound on the surface of the lithium metal oxide particle before the formation of the coating layer. Preferably, the content of the lithium compound on the surface of the cathode active material may be 30% or less of the content of the lithium compound on the surface of the lithium metal oxide particle before the formation of the coating layer.

Within the above range, the surface structure of the cathode active material may be prevented from being damaged due to the side reaction of the cathode active material with the electrolyte, or moisture and carbon dioxide in the air, thereby improving structural stability and the power and capacity properties.

Further, an additional cleaning process for removing the lithium compound remaining after the formation of the coating layer may be omitted, so that process efficiency may be improved.

If the cathode active material is washed with an aqueous or organic solvent, the specific surface area of the cathode active material may be increased. However, according to exemplary embodiments, the additional cleaning process may be omitted to prevent the increase of the specific surface area.

Referring to FIG. 1 again, A cathode slurry may be prepared by mixing and stirring the cathode active material as described above in a solvent with a binder, a conductive material and/or a dispersive agent. The cathode slurry may be coated on a cathode current collector 110, and then dried and pressed to form a cathode 130.

The cathode current collector 110 may include stainless-steel, nickel, aluminum, titanium, copper or an alloy thereof. Preferably, aluminum or an alloy thereof may be used.

The binder may include an organic based binder such as a polyvinylidene fluoride-hexafluoropropylene copolymer (PVDF-co-HFP), polyvinylidenefluoride (PVDF), polyacrylonitrile, polymethylmethacrylate, etc., or an aqueous based binder such as styrene-butadiene rubber (SBR) that may be used with a thickener such as carboxymethyl cellulose (CMC).

For example, a PVDF-based binder may be used as a cathode binder. In this case, an amount of the binder for forming the cathode active material layer may be reduced, and an amount of the cathode active material may be relatively increased. Thus, capacity and power of the lithium secondary battery may be further improved.

The conductive material may be added to facilitate electron mobility between active material particles. For example, the conductive agent may include a carbon-based material such as graphite, carbon black, graphene, carbon nanotube, etc., and/or a metal-based material such as tin, tin oxide, titanium oxide, a perovskite material such as LaSrCoO₃ or LaSrMnO₃, etc.

In exemplary embodiments, an anode 140 may include an anode current collector 120 and an anode active material layer 125 formed by coating an anode active material on the anode current collector 120.

The anode active material may include a material commonly used in the related art which may be capable of adsorbing and ejecting lithium ions. For example, a carbon-based material such as a crystalline carbon, an amorphous carbon, a carbon complex or a carbon fiber, a lithium alloy, a silicon (Si)-based compound, tin, etc., may be used.

The amorphous carbon may include hard carbon, cokes, a mesocarbon microbead (MCMB) fired at a temperature of 1,500 °C or less, a mesophase pitch-based carbon fiber (MPCF), etc.

The crystalline carbon may include a graphite-based material such as natural graphite, graphitized cokes, graphitized MCMB, graphitized MPCF, etc.

The lithium alloy may further include aluminum, zinc, bismuth, cadmium, antimony, silicon, lead, tin, gallium, indium, etc.

The anode current collector 120 may include, e.g., gold, stainless steel, nickel, aluminum, titanium, copper or an alloy thereof, preferably may include copper or a copper alloy.

In some embodiments, an anode slurry may be prepared by mixing and stirring the anode active material with a binder, a conductive material and/or a dispersive agent in a solvent. The anode slurry may be coated on a surface of the anode current collector 120, and then dried and pressed to form the anode 140.

Materials substantially the same as or similar to those used in the cathode slurry may be used as the binder and the conductive material. In some embodiments, the binder for the anode may include, e.g., an aqueous binder such as styrene-butadiene rubber (SBR) for compatibility with the carbon-based active material, and may be used with a thickener such as carboxymethyl cellulose (CMC).

The separation layer 150 may be interposed between the cathode 130 and the anode 140 to form an electrode cell 160.

The separation layer 150 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, or the like. The separation layer 150 may be also formed from a non-woven fabric including a glass fiber with a high melting point, a polyethylene terephthalate fiber, or the like.

In some embodiments, an area and/or a volume of the anode 140 (e.g., a contact area with the separation layer 150) may be greater than that of the cathode 130. Thus, lithium ions generated from the cathode 130 may be easily transferred to the anode 140 without loss by, e.g., precipitation or sedimentation. Therefore, the enhancement of power and stability by the above-described active material may be effectively implemented.

In exemplary embodiments, an electrode cell 160 may be defined by the cathode 130, the anode 140 and the separation layer 150, and a plurality of the electrode cells 160 may be stacked to form an electrode assembly having, e.g., a jelly roll shape. For example, the electrode assembly may be formed by winding, laminating or folding of the separation layer.

The electrode assembly may be accommodated together with an electrolyte in a case 170 to define a lithium secondary battery. In exemplary embodiments, a non-aqueous electrolyte may be used as the electrolyte.

For example, the non-aqueous electrolyte solution may include a lithium salt and an organic solvent. The lithium salt and may be represented by Li⁺X⁻. An anion of the lithium salt X⁻ may include, e.g., F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc. These may be used alone or in a combination thereof.

An electrode tab may be formed from each of the cathode current collector 110 and the anode current collector 120 included in each electrode cell, and may extend to one side of the case 170. The electrode tabs may be fused together with the one side of the case 170 to be connected to electrode leads that may be extended or exposed to and outside of the case 170.

The lithium secondary battery may be manufactured in, e.g., a cylindrical shape using a can, a square shape, a pouch shape or a coin shape.

Hereinafter, preferred embodiments are proposed to more concretely describe the present invention. However, the following examples are only given for illustrating the present invention and those skilled in the related art will obviously understand that various alterations and modifications are possible within the scope and spirit of the present invention. Such alterations and modifications are duly included in the appended claims.

### Examples and Comparative Examples

### (1) Preparation of lithium metal oxide particle

NiSO₄, CoSO₄ and MnSO₄ were mixed with ratios (molar ratios) as shown in Table 1 below in distilled water from which dissolved oxygen was removed by being bubbled with N₂ for 24 hours. The solution was put into a reactor at 50°C, and NaOH and NH₃H₂O were used as a precipitating agent and a chelating agent, respectively, to perform a co-precipitation reaction for 48 hours so that a nickel-cobalt-manganese hydroxide (a composite metal salt compound) having a particle diameter from about 10 µm to 20 µm was formed. The composite metal salt compound was dried at 80° C for 12 hours and then re-dried at 110° C for 12 hours.

Thereafter, lithium hydroxide was added so that a ratio between the composite metal salt compound and lithium hydroxide was 1:1.05, followed by uniformly stirring and mixing for 5 minutes. The mixture was placed in a kiln, and the temperature was raised to 710°C at a heating rate of 2°C/min, and maintained at 710°C for 10 hours. Oxygen was passed continuously at a flow rate of 10 mL/min during the temperature raise and maintenance. After the firing, natural cooling was performed to a room temperature, followed by pulverization and classification to obtain lithium composite oxide particles.

Molar ratios of nickel, cobalt and manganese of the lithium composite oxide particle are shown in Table 1 below (e.g., a chemical formula of the lithium composite oxide particle of Example 8 was LiNi_{0.8}Co_{0.1}Mn_{0.1}O₂).

Thereafter, the lithium metal oxide particles were put in an aqueous solvent, stirred for 30 minutes, and filtered to remove the solvent. The above washing was repeated so that a content of lithium compounds (LiOH, Li₂CO₃) present on the surface of the lithium metal oxide particle became as shown in Table 1 below based on a total weight of the lithium metal oxide particles.

### (2) Preparation of cathode active material

### Examples 1-10, Comparative Examples 5-8

The dried lithium metal oxide particles and H₃BO₃ having a volume average particle diameter of about 30 nm to 70 nm were added to a dry high-speed mixer and uniformly mixed for 5 minutes. The mixture was placed in a kiln, and a temperature was raised to 350 °C at a heating rate of 2 °C/min and maintained for 10 hours. Oxygen was passed continuously at a flow rate of 10 mL/min during the temperature raise and maintenance.

After the firing, natural cooling was performed to a room temperature, followed by pulverization and classification to obtain a cathode active material having a coating layer including a lithium boron composite oxide in an amount as shown in Table 1 below. H₃BO₃ was added so that a content of the lithium boron composite oxide became as shown in Table 1 below based on a total weight of the cathode active material.

### Examples 11 and 12

Cathode active materials were prepared by the same method as those of Example 1 and Example 2, except that an aluminum compound (Al(OH)₃) was further added and mixed in an amount of 2,000 ppm based on a total weight of the lithium hydroxide and the composite metal salt in the preparation of the lithium metal oxide particle.

### Comparative Examples 1 to 4

The dried lithium metal oxide particles and ZrO₂ having a volume average particle diameter of about 30 nm to 70 nm in an amount of 1,000 ppm based on a weight of the lithium metal oxide particles were added in a dry high-speed mixer and uniformly mixed for 5 minutes. The mixture was put into a kiln, and the temperature was raised to 700°C at a heating rate of 2°C/min and maintained for 10 hours.

Oxygen was passed continuously at a flow rate of 10 mL/min during the temperature raise and maintenance. After the firing, natural cooling was performed to a room temperature, followed by pulverization and classification to obtain a cathode active material.

**[Table 1]**

| No. | Ratios of transition metals in the cathode active material (Ni : Co : Mn) | boron coating | Al doping | content of lithium compound (ppm) | content of lithium boron composite oxide (ppm) |
|---|---|---|---|---|---|
| Example 1 | 8 : 1 : 1 | ○ | □ | 750 | 501 |
| Example 2 | 7 : 1.5 : 1.5 | ○ | □ | 830 | 503 |
| Example 3 | 8.8 : 0.9 : 0.3 | ○ | □ | 845 | 499 |
| Example 4 | 9.2 : 0.5 : 0.3 | ○ | □ | 790 | 511 |
| Example 5 | 8 : 1 : 1 | ○ | □ | 110 | 105 |
| Example 6 | 8 : 1 : 1 | ○ | □ | 519 | 498 |
| Example 7 | 8 : 1 : 1 | ○ | □ | 1086 | 1008 |
| Example 8 | 8 : 1 : 1 | ○ | □ | 1512 | 531 |
| Example 9 | 8 : 1 : 1 | ○ | □ | 1512 | 1408 |
| Example 10 | 8 : 1 : 1 | ○ | □ | 1938 | 1497 |
| Example 11 | 8 : 1 : 1 | ○ | ○ | 507 | 503 |
| Example 12 | 7 : 1.5 : 1.5 | ○ | ○ | 498 | 501 |
| Comparative Example 1 | 8 : 1 : 1 | □ | □ | 504 | - |
| Comparative Example 2 | 7 : 1.5 : 1.5 | □ | □ | 511 | - |
| Comparative Example 3 | 5:2:3 | □ | □ | 497 | - |
| Comparative Example 4 | 6:2:2 | □ | □ | 505 | - |
| Comparative Example 5 | 8 : 1 : 1 | ○ | □ | 85 | 80 |
| Comparative Example 6 | 8 : 1 : 1 | ○ | □ | 2123 | 1957 |
| Comparative Example 7 | 5:2:3 | ○ | □ | 489 | 481 |
| Comparative Example 8 | 6:2:2 | ○ | □ | 500 | 505 |

### Experimental Example 1: Analysis of total coating coverage ratio and lithium compound reduction ratio

In the preparation of the cathode active material, a specific surface area of the surface of the core portion including each of the lithium metal oxide particle of Examples and Comparative Examples was measured before forming the coating layer. A specific surface area of the coated cathode active material surface was measured again after the formation of the coating layer.

The specific surface area was measured by a BET (Brunaucr-Emmett-Teller) method.

A coating coverage ratio was calculated as a percentage of the specific surface area of the coated cathode active material relative to the specific surface area of the core portion.

The lithium compound reduction ratio was calculated as a percentage of a reduced lithium compound content after the coating (e.g., a difference between the lithium compound content present on the surface of the core portion and the lithium compound content after the formation of the coating layer) relative to the content of the lithium compound present on the surface of the lithium metal oxide particle before the formation of the coating layer.

The coating coverage ratio, an amount of residual lithium and the residual lithium reduction ratio are shown in Table 2 below.

### Experimental Example 2: Analysis of lithium by-product increasing ratio

A content of a lithium by-product (Li₂CO₃) present on the surface of each cathode active material of Examples and Comparative Examples was measured using a pH titration method. Thereafter, the cathode active materials of Examples and Comparative Examples were left in an air at room temperature for 30 days. A content of the lithium by-product (Li₂CO₃) increased on the surface of each cathode active material of Examples and Comparative Examples according to a storage period was measured using a pH titration method.

Specifically. the cathode active materials of Examples and Comparative Examples were poured into distilled water to dissolve the lithium by-product remaining on the surface of the cathode active material, and then the solution was only filtered and titrated while injecting 0.1M HCl at a rate of 0.3-0.5 mL/min. The content of the lithium by-product was calculated using the amount of HCl injected up to pH 5. A pH titration equipment manufacture from Metrohm was used.

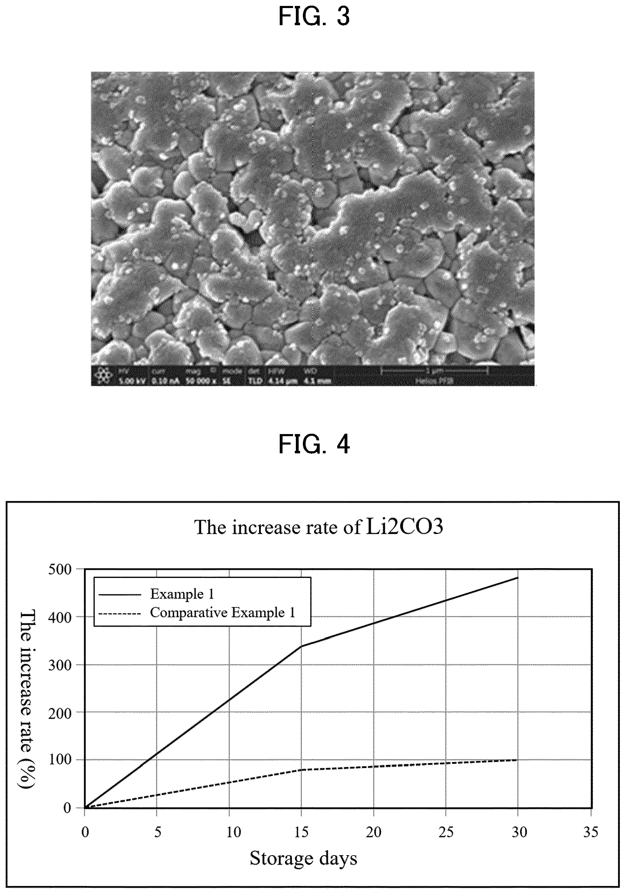

A Li₂CO₃ increasing ratio was calculated as a percentage of the Li₂CO₃ content present on the surface of the active material after the storage relative to the Li₂CO₃ content initially present on the surface of the active material. FIG. 4 shows the increasing ratio of Li₂CO₃ according to storage days in Example 1 and Comparative Example 1.

The Li₂CO₃ increasing ratio in the cathode active materials of Examples and Comparative Examples after the storage in air for 30 days were shown in Table 2 below.

**[Table 2]**

| No. | coverage ratio (%) | lithium compound content after coating (ppm) | reduction ratio of the lithium compound(%) | Li₂CO₃ increasing ratio (%) |
|---|---|---|---|---|
| Example 1 | 91 | 407 | 46 | 100 |
| Example 2 | 84 | 460 | 45 | 95 |
| Example 3 | 82 | 480 | 43 | 103 |
| Example 4 | 84 | 442 | 44 | 110 |
| Example 5 | 61 | 75 | 32 | 177 |
| Example 6 | 77 | 202 | 61 | 102 |
| Example 7 | 86 | 412 | 62 | 98 |
| Example 8 | 60 | 1114 | 26 | 165 |
| Example 9 | 92 | 557 | 63 | 124 |
| Example 10 | 91 | 1023 | 47 | 131 |
| Example 11 | 78 | 248 | 59 | 136 |
| Example 12 | 80 | 199 | 60 | 104 |
| Comparative Example 1 | 43 | 473 | 6 | 472 |
| Comparative Example 2 | 42 | 476 | 7 | 511 |
| Comparative Example 3 | 50 | 427 | 14 | 212 |
| Comparative Example 4 | 52 | 418 | 17 | 266 |
| Comparative Example 5 | 41 | 69 | 19 | 197 |
| Comparative Example 6 | 81 | 1019 | 52 | 146 |
| Comparative Example 7 | 72 | 205 | 58 | 85 |
| Comparative Example 8 | 73 | 200 | 60 | 94 |

Referring to Tables 1 and 2 above, as the content of the lithium compound became smaller, the content of the lithium boron composite oxide and the coating coverage ratio were decreased. As the content of the lithium compound became greater, the content of the lithium compound remaining after the coating was increased to cause an increase of the lithium by-products.

In Comparative Examples 1 to 4 where the coating layer was formed using ZrO₂ instead of the boron oxide, the coating coverage ratio was significantly decreased due to the formation of the non-uniform coating layer.

Within the range of the lithium compound from 100 ppm to 2,000 ppm, the lithium boron composite oxide coating layer was properly formed to increase the coating coverage ratio. Further, the amount of the lithium compound on the surface of the cathode active material was decreased, and the increasing ratio of the lithium by-products on the surface of the cathode active material was reduced.

The lithium compound on the surface of the cathode active material may react with moisture or carbon dioxide in an air to generate the lithium byproducts such as lithium carbonate. The surface and the internal structure of the cathode active material may be destroyed due to the lithium by-products. Accordingly, structural and chemical defects of the cathode active material may be increased, thereby degrading the life-span and power of the secondary battery.

However, in the cathode active material according to embodiments of the present invention, the coating layer may be formed with high coverage ratio, and the lithium compounds remaining on the surface of the cathode active material may become small. Thus, a structural stability of the cathode active material may be enhanced.

### Experimental Example 3: Surface analysis of cathode active material

FIG. 2 is a scanning electron microscopy (SEM) image showing a surface of a cathode active material for a lithium secondary battery of Example 1;

FIG. 3 is an SEM image showing a surface of a cathode active material for a lithium secondary battery of Comparative Example 1.

Referring to FIGS. 2 and 3, in the cathode active material of Comparative Example 1, the coating layer was not uniformly formed on a particle surface and thus the coverage ratio was reduced. Therefore, in the cathode active material of Example 1 where the boron composite oxide coating layer was formed on the particle surface, the high coverage ratio was achieved by the formation of the uniform coating layer.

### Preparation Example: Fabrication of secondary battery

### Secondary batteries were fabricated using the cathode active materials of Examples and Comparative Examples

Specifically, the cathode active material, Denka Black as a conductive material and PVDF as a binder were mixed in a mass ratio of 93:5:2 to prepare a cathode mixture, and then the cathode mixture was coated, dried and pressed on an aluminum current collector to prepare a cathode. An electrode density of the cathode after the pressing was adjusted to 3.0 g/cc or more.

An anode slurry was prepared by mixing 93 wt% of natural graphite as an anode active material, 5 wt% of a flake type conductive material KS6, 1 wt% of SBR as a binder and 1 wt% of CMC as a thickener. The anode slurry was coated, dried and pressed on a copper substrate to form an anode.

The cathode and the anode obtained as described above were notched with a proper size and stacked, and a separator (polyethylene, thickness: 25µm) was interposed between the cathode and the anode to form an electrode cell. Each tab portion of the cathode and the anode was welded. The welded cathode/separator/anode assembly was inserted in a pouch, and three sides of the pouch (e.g., except for an electrolyte injection side) were sealed. The tab portions were also included in sealed portions. An electrolyte was injected through the electrolyte injection side, and then the electrolyte injection side was also sealed. Subsequently, the above structure was impregnated for 12 hours or more.

The electrolyte was prepared by forming a 1M LiPF₆ solution in a mixed solvent of EC/EMC/DEC (25/45/30; volume ratio), and then adding 1 wt% of vinylene carbonate, 0.5 wt% of 1,3-propensultone, and 0.5 wt% of lithium bis(oxalato) borate (LiBOB).

### Experimental Example 4: Evaluation on capacity retention after 60 °C storage

Charge (CC/CV 0.1C 4.3V 0.05C CUT-OFF) and discharge (CC 0.1C 3.0V CUT-OFF) were performed once for the secondary battery fabricated by the Preparation Example as described above to measure an initial discharge capacity (CC: Constant Current, CV: Constant Voltage).

After a high temperature (60°C) storage of the secondary battery for 30 days, charge (CC/CV 0.1C 4.3V 0.05C CUT-OFF) and discharge (CC 0.1C 3.0V CUT-OFF) were performed once to measure a discharge capacity after the high temperature storage.

A high-temperature storage capacity retention was calculated as a percentage of the discharge capacity after the high-temperature storage relative to the initial discharge capacity.

### Experimental Example 5: Evaluation on life-span at 45°C

Charging (CC/CV 0.5C 4.3V 0.05C cut-off) and discharging (CC 1.0C 3.0V cut-off) were performed as one cycle at 45° C for the secondary battery according to the above-described Preparation Example to measure an initial discharge capacity.

The cycle was repeated 350 times to evaluate a capacity retention as a percentage of a discharge capacity at a 350th cycle relative to the initial capacity.

### Experimental Example 6: Evaluation of gas generation

The secondary battery according to the above-described Preparation Example was respectively charged (CC/CV 0.1C 4.3V 0.05C CUT-OFF), and then stored at 60 °C for 30 days. An amount of gas generated at an inside of the secondary battery depending on time was measured. The amount of gas was calculated as a volume change of the secondary battery.

The evaluation results are shown in Table 3 below.

**[Table 3]**

| No. | High temperature (60°C) storage property | | | Life-span (capacity retention at 350th cycle) (%) | Gas generation (ml/Ah) |
|---|---|---|---|---|---|
| | Initial discharge capacity (mAh/g) | discharge capacity after the storage (mAh/g) | high temperature capacity retention(%) | | |
| Example 1 | 203.3 | 180.9 | 89 | 86 | 0.55 |
| Example 2 | 192.1 | 174.8 | 91 | 89 | 0.61 |
| Example 3 | 216.2 | 185.9 | 86 | 85 | 0.7 |
| Example 4 | 223.5 | 187.7 | 84 | 83 | 0.77 |
| Example 5 | 203.3 | 162.6 | 80 | 77 | 0.86 |
| Example 6 | 203.8 | 179.3 | 88 | 86 | 0.58 |
| Example 7 | 202.4 | 172.1 | 85 | 85 | 0.57 |
| Example 8 | 202.7 | 162.2 | 80 | 79 | 0.81 |
| Example 9 | 201.5 | 167.2 | 83 | 85 | 0.56 |
| Example 10 | 201 | 166.8 | 83 | 84 | 0.55 |
| Example 11 | 202.9 | 184.6 | 91 | 89 | 0.47 |
| Example 12 | 192 | 176.6 | 92 | 89 | 0.45 |
| Comparative Example 1 | 202.3 | 149.7 | 74 | 75 | 1.2 |
| Comparative Example 2 | 191.6 | 147.5 | 77 | 76 | 1 |
| Comparative Example 3 | 167.8 | 135.9 | 81 | 80 | 0.73 |
| Comparative Example 4 | 177.6 | 145.6 | 82 | 80 | 0.79 |
| Comparative Example 5 | 203.1 | 158.4 | 78 | 75 | 0.99 |
| Comparative Example 6 | 190.1 | 155.8 | 82 | 84 | 0.56 |
| Comparative Example 7 | 168.1 | 146.2 | 87 | 85 | 0.59 |
| Comparative Example 8 | 177.8 | 151.1 | 85 | 85 | 0.6 |

Referring to Tables 1 to 3, improved capacity retention and low gas generation were generally obtained from the secondary batteries of Examples compared to those from Comparative Examples in which the lithium boron oxide coating layer was not formed. It is predicted that stability of the surface and internal structure of the cathode active material particles was improved due to the lithium boron oxide coating layer.

In Examples where the lithium boron composite oxide was contained in an amount of more than 1,500 ppm, electrical properties were relatively degraded due to an increase of a resistance by the excessive amount of the lithium boron composite oxide.

In Examples where the aluminum-doped coating layer, the capacity retention and high temperature stability were improved.

In Examples where nickel was included in a molar ratio of 0.7 or more, the initial discharge capacity or the capacity retention was increased compared to those from Comparative Examples in which a molar ratio of nickel was 0.5 or 0.6.

## Claims

1. A cathode active material for a lithium secondary battery, comprising:
a core portion comprising a lithium metal oxide particle represented by Chemical Formula 1; and
a coating layer at least partially covering a surface of the core portion and including a lithium boron composite oxide,
wherein the lithium boron composite oxide is included in an amount from 100 ppm to 1,500 ppm based on a total weight of the cathode active material:
[Chemical Formula 1] LiₓNiₐM1_{b}O₂
wherein, in Chemical Formula 1, M1 is at least one element selected from the group consisting of Co, Mn, Ti, Zr, Al, Mg and Cr, 0.8<x<1.5, 0.7≤a≤0.96, and 0.98≤a+b ≤1.02.

2. The cathode active material for a lithium secondary battery of claim 1, wherein the coating layer covers 70% or more of a total surface area of the core portion.

3. The cathode active material for a lithium secondary battery of claim 1, wherein the lithium metal oxide particle has a layered structure.

4. The cathode active material for a lithium secondary battery of claim 1, wherein the lithium boron composite oxide comprises at least one amorphous compound selected from LiBO₂, Li₂BO₂, Li₂B₄O₇, Li₂B₈O₁₃ and Li₃BO₃.

5. The cathode active material for a lithium secondary battery of claim 1, wherein the coating layer further comprises aluminum.

6. The cathode active material for a lithium secondary battery of claim 1, wherein the lithium metal oxide particle comprises a compound represented by Chemical Formula 2:
[Chemical Formula 2] Li_{y}Ni_{c}Co_{d}MnₑM2_{f}O₂
wherein, in Chemical Formula 2, M2 is at least one element selected from the group consisting of Ti, Zr, Al, Mg and Cr, 0.8<y<1.5, 0.70≤c≤0.96, 0.02≤d≤0.20, 0.02≤e <0.20, 0≤f≤0.05, and 0.98≤c+d+e≤1.02.

7. A lithium secondary battery, comprising:
a cathode comprising the cathode active material for a lithium secondary battery of claim 1; and
an anode facing the cathode.

8. A method of preparing a cathode active material for a lithium secondary battery, comprising:
preparing a core portion comprising a lithium metal oxide particle represented by Chemical Formula 1;
mixing the core portion and a boron oxide to form a mixture; and
heat-treating the mixture to form a coating layer containing a lithium boron composite oxide on a surface of the core portion,
wherein the lithium metal oxide particle prepared as the core portion contains a lithium compound in a range from 100 ppm to 2,000 ppm on a surface of the lithium metal oxide particle based on a total weight of the lithium metal oxide particle:
[Chemical Formula 1] LiₓNiₐM1_{b}O₂
wherein, in Chemical Formula 1, M1 is at least one element selected from the group consisting of Co, Mn, Ti, Zr, Al, Mg and Cr, 0.8<x<1.5, 0.7≤a≤0.96, and 0.98≤a+b ≤1.02.

9. The method of claim 8, wherein the heat-treating is performed at a temperature in a range from 250 °C to 500 °C.

10. The method of claim 8, wherein the mixing the core portion and the boron oxide is performed by a mechanical milling.

11. The method of claim 8, wherein the boron oxide is used in an amount from 100 ppm to 1,500 ppm based on a total weight of the lithium metal oxide particle.

12. The method of claim 8, wherein the boron oxide has a volumetric average particle diameter in a range from 10 nm to 500 nm.

13. The method of claim 8, wherein an aluminum compound is further added in the formation of the mixture.

14. The method according to claim 8, wherein a content of the lithium compound on a surface of the cathode active material for a lithium secondary battery is 50% or less of a content of the lithium compound on a surface of the lithium metal oxide particle before the formation of the coating layer.

15. The method according to claim 8, wherein the lithium metal oxide particle is represented by Chemical Formula 2:
[Chemical Formula 2] Li_{y}Ni_{c}Co_{d}MnₑM2_{f}O₂
wherein, in Chemical Formula 2, M2 is at least one element selected from the group consisting of Ti, Zr, Al, Mg and Cr, 0.8<y<1.5, 0.70≤c≤0.96, 0.02≤d≤0.20, 0.02≤e <0.20, 0≤f≤0.05, and 0.98≤c+d+e≤1.02.
